(19) Europäisches Patentamt

European Patent Office

Office européen des brevets

(11) **EP 4 685 532 A1**

(12) **EUROPEAN PATENT APPLICATION**

(43) Date of publication:
**28.01.2026 Bulletin 2026/05**

(21) Application number: **25190990.9**

(22) Date of filing: **22.07.2025**

(51) International Patent Classification (IPC):
**G02B 6/02** (2006.01)      **G02B 6/30** (2006.01)
**G02B 6/12** (2006.01)

(52) Cooperative Patent Classification (CPC):
**G02B 6/02328; G02B 6/305;** G02B 2006/12195

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.07.2024 US 202463673901 P**

(71) Applicant: **Corning Research & Development
Corporation
Corning, New York 14831 (US)**

(72) Inventor: **WU, Qi
New York, 14870 (US)**

(74) Representative: **Reddie & Grose LLP
The White Chapel Building
10 Whitechapel High Street
London E1 8QS (GB)**

(54) **HOLLOW-CORE FIBER ARRAY UNIT WITH INTEGRATED SOLID CORE WAVEGUIDE INTERFACE**

(57)    A hollow core fiber array unit includes hollow core fibers each having a terminal end and an adapter that includes grooves. Each groove receives the terminal end of one of the hollow core fibers. The terminal end of the hollow core fibers is spaced from an end face of the adapter. The hollow core fiber array unit includes a spot size converter coupled to the end face of the adapter. The spot size converter includes a plurality of waveguides that correspond to the hollow core fibers. Each waveguide extends from an input at an input end of the spot size converter that is coupled to the end face of the adapter to an output at an opposite output end of the spot size converter. The input of each waveguide includes a first mode field diameter that corresponds to the hollow core fibers and the output includes a second mode field diameter.

**FIG. 2**

## Description

## Priority Application

This application claims the benefit of priority of U.S. Provisional Application No. 63/673,901, filed on July 22, 2024, the content of which is relied upon and incorporated herein by reference in its entirety.

## Technical Field

This disclosure relates generally to optical connectivity, and more particularly to devices and methods of coupling hollow core optical fibers to other hollow core optical fibers and solid core optical fibers.

## Background

Optical fibers are useful in a wide variety of applications, including the telecommunications industry for voice, video, and data transmissions. Benefits of optical fibers include wide bandwidth and low noise operation. The most common type of optical fiber includes a higher refractive index region (referred to as a "core") that is surrounded by a lower refractive index region (referred to as "cladding"). This solid core and the adjacent cladding define an optical waveguide which guides light along the length of the optical fiber. In contrast, hollow core optical fibers, which have a core that largely comprises air or a vacuum, have a core with a lower refractive index than the cladding. Hollow core optical fibers have attracted interest recently due to certain performance advantages they provide over solid core optical fibers. These advantages include low optical attenuation, particularly in visible and near IR wavelengths. Recently, the lower attenuation capability has been extended to the telecommunications wavelength window, where an attenuation of 0.11dB/km was established as the new record.

In addition to low optical attenuation, hollow core optical fibers offer about 30% lower latency than conventional solid core fibers. This low latency was initially utilized in high-frequency trading but has now become a significant advantage for interconnecting regional hyperscale datacenters over long distances. With the rise of generative artificial intelligence (AI), scaling out AI systems requires low latency interconnects for graphics processing unit (GPU) clusters and memory systems. Additionally, hollow core optical fibers exhibit low nonlinearities, reduced dispersion, and a broad transmission wavelength window, providing significant performance advantages across various applications.

However, the structural differences between hollow core and conventional solid core fibers pose challenges to existing fiber termination processes. For instance, the end face of a hollow core optical fiber cannot be effectively polished because contamination of the micro holes by particles would generate excess optical loss. Furthermore, liquid can wick into the hollow core over a long length through capillary action, disrupting the light-guiding mechanism. Common solutions involve hermetically sealing the ends of hollow core fibers by fusion splicing or gluing them to solid core fibers through mode field diameter converting devices like graded index lenses or fibers. These approaches, however, increase connectivity loss, are costly, and lack scalability. Conversely, connectors for hollow core to hollow core fibers and hollow core to single mode fibers (i.e., solid core fibers) using thermally expanded core fibers offer lower insertion loss and simpler assembly processes.

For long-distance applications, using a hybrid link with a long span of hollow core optical fiber connected to single mode optical fibers at both ends provides sufficient latency benefits. However, in AI system applications where the interconnect length is much shorter, end-to-end hollow core optical fiber interconnects between transceivers are preferable to minimize latency. To utilize the existing transceiver ecosystem based on single mode fiber interfaces, it is conceivable to embed the hollow core to single mode fiber splice inside the connector ferrule for duplex interfaces. However, for high-density parallel interfaces and co-packaged transceiver chiplets, the existing single fiber-based process lacks the necessary throughput and density.

Thus, there is a need in the telecommunications industry for a high-density hollow core optical fiber array unit with single mode fiber end faces that can directly interface with transceiver chips. In particular, there is a need for a high-density hollow core optical fiber array unit with an integrated waveguide spot size converter and single mode fiber end faces for drop-in replacement of standard fiber array units to enable direct hollow core optical fiber connections to the transceiver without the need for external splices between single mode fibers and hollow core fibers.

## Summary

In an aspect of the disclosure, a hollow core fiber array unit is disclosed. The hollow core fiber array unit includes a plurality of hollow core fibers each having a terminal end and an adapter that includes a plurality of grooves. Each groove receives the terminal end of one of the plurality of hollow core fibers. The terminal end of the plurality of hollow core fibers is spaced from an end face of the adapter. The hollow core fiber array unit includes a spot size converter coupled to the end face of the adapter. The spot size converter includes a plurality of waveguides that correspond to the plurality of hollow core fibers. Each waveguide extends from an input at an input end of the spot size converter that is coupled to the end face of the adapter to an output at an opposite output end of the spot size converter. The input of each waveguide includes a first mode field diameter that corresponds to the plurality of hollow core fibers and the output of each waveguide includes a second mode field diameter.

In one embodiment, each waveguide may adiabatically transition from the input to the output of the spot size converter. The first mode field diameter may be about 30 $\mu$m. The second mode field diameter may correspond to a single mode fiber. For example, the second mode field diameter may be about 10 $\mu$m.

In another embodiment, the terminal end of each of the plurality of hollow core fibers may be cleaved. For instance, the terminal end of each of the plurality of hollow core fibers may include an end face angle of about 3°. In one embodiment, the hollow core fiber array unit may include a membrane between the end face of the hollow core fiber and the spot size converter. For example, the membrane may include a thickness of less than about 5 $\mu$m.

In one embodiment, the spot size converter may extend a length between the input end and the output end, the length being less than about 5 mm. In yet another embodiment, the end face of the adapter may be angled to define an end face angle. For example, the end face angle of the adapter may be about 4.4°.

In another embodiment, the spot size converter may be made of glass including thermally diffused waveguide tapers. In yet another embodiment, the spot size converter may be made of polymer with the plurality of waveguides having diffusion tapers. In one embodiment, the spot size converter may be made of silicon nitride with the plurality of waveguides including inverse tapers on silicon oxide undercladding and overcladding having a thickness of at least 20 $\mu$m.

In one embodiment, a pitch angle may be formed between the end face of the adapter and the input end of the spot size converter. The pitch angle may be at least 1° relative to a plane of the spot size converter. In another embodiment, the hollow core fiber array unit may include a turn fiber array connected to the output end of the spot size converter. The turn fiber array may be a 90° turn fiber array, for example.

According to another aspect of the disclosure, a method of manufacturing a spot size converter for embodiments of the hollow core fiber array unit set forth above is disclosed. The method includes providing a substrate and forming an array of waveguide preforms in the substrate to form a waveguide chip. The method further includes heating the waveguide chip, with a middle section of the waveguide preforms being locally heated with a flat top temperature profile to provide each of the plurality of waveguide preforms with a maximum mode field diameter at a midline of the waveguide chip. The method then includes, cutting the waveguide chip in half along the midline to form a pair of spot size converters. Each spot size converter includes a plurality of waveguides.

In one embodiment, the substrate may be a glass substrate. In another embodiment, the maximum mode field diameter may be about 30 $\mu$m. In that regard, each waveguide preform may extend from a first output end at a first end of the waveguide chip to a second output end at an opposite second end of the waveguide chip. The first output end and the second output end may each have a mode filed diameter of about 10 $\mu$m.

## Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.

Fig. 1 is a diagrammatic cross-sectional view of an exemplary hollow core optical fiber.
Fig. 2 is a perspective view of a hollow core fiber array unit in accordance with an embodiment of the disclosure.
Fig. 3 is a perspective view of an end face of an array adapter of the hollow core fiber array unit of Fig. 2.
Fig. 4 is a side view of the hollow core fiber array unit, illustrating a connection between the array adapter and a spot size converter of the hollow core fiber array unit.
Fig. 5 is a diagrammatic representation of the end face angles of the connected array adapter and the spot size converter of the hollow core fiber array unit.
Fig. 6 is an enlarged cross-sectional view of the connection between the array adapter and the spot size converter of the hollow core fiber array unit.
Fig. 7 is a cross-sectional view of the connection between the array adapter and the spot size converter of the hollow core fiber array unit, illustrating details of a waveguide of the spot size converter.
Fig. 8 is a schematic representation of a process of forming a waveguide chip.
Fig. 9 is a perspective view of a processed waveguide chip.
Fig. 10 is a perspective view of the processed waveguide chip of Fig. 9 after being diced to form a pair of waveguide substrates for use in a spot size converter.
Fig. 11 is a perspective view of the spot size converter, illustrating details of the waveguide substrate and a cover.
Fig. 12 is a perspective view of a hollow core fiber array unit including a curved fiber array in accordance with another embodiment of the disclosure.

## Detailed Description

Various embodiments will be further clarified by examples in the description below. In general, the description relates to systems and methods that enable a high-density array of hollow core optical fibers (HCF) that can directly interface with transceiver chips for coupling to both solid-core optical fibers (e.g., standard single-mode optical fiber (SMF)) and to other hollow core optical fibers. The embodiments described below provide a solution for using hollow core fiber for end-to-end interconnects between transceivers, eliminating the need for single mode fiber. The hollow core fiber array unit incorporates a waveguide-based spot size converter, ensuring compatibility with single-mode optical fiber interfaces to transceiver chips. Transceivers or chiplets are externally interfaced with hollow core fiber connectors. The advantages of this approach include offering the lowest latency for short-reach applications, such as AI clusters and disaggregated memory networks, by avoiding the use of single-mode fiber. Additionally, waveguide-based spot size converters enable higher density, process parallelism, and scalability compared to existing single fiber-based devices. These and other benefits will be described in further detail below.

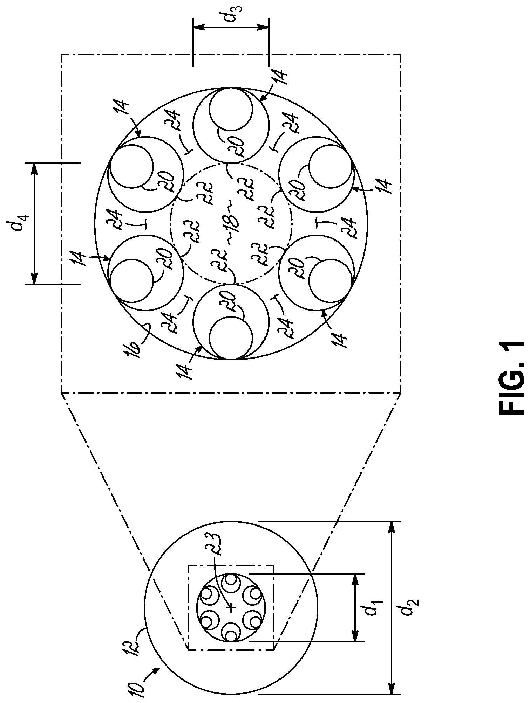

Fig. 1 depicts a cross-sectional axial view of an exemplary hollow core optical fiber 10. The hollow core optical fiber 10 includes a cladding 12 and a plurality of structural tubes 14 arranged circumferentially on an inner surface 16 of the cladding 12 to define a hollow core 18. The depicted embodiment includes six structural tubes 14 each having a nested structure comprising an inner tube 20 and an outer tube 22. It should be understood, however, that the fiber optic coupling systems and methods disclosed herein may be used with any type of hollow core optical fiber and are therefore not limited to hollow core optical fibers including any number of structural tubes or structural tubes that are nested.

The cladding 12 and the structural tubes 14 may be formed, for example, of doped or undoped silica glass. The cladding 12 may have an inner diameter $d_1$ and an outer diameter $d_2$, and the structural tubes 14 may have an outer diameter $d_3$. The dimensions of the cladding 12 and structural tubes 14 may be selected so that the hollow core 18 has a diameter $d_4$ equal to twice the radius thereof. The radius of the hollow core 18 may be defined, for example, as the minimum distance between the surfaces of structural tubes 14 and an optical axis 23 of the hollow core optical fiber 10. The dimensions may also be selected so that adjacent structural tubes 14 are separated by a gap 24. The gap 24 may prevent adjacent structural tubes 14 from contacting each other. The gap 24 may thereby avoid the formation of a waveguide along a line of contact between the structural tubes 14 due to a doubling of the wall thickness of the structural tubes 14 where they come into contact.

The dimensions and other characteristics of the cladding 12 and structural tubes 14 (e.g., the refractive index) may be selected to define a waveguide that generally confines optical beams propagating through the hollow core optical fiber 10 to the hollow core 18. The thickness of the walls of the structural tubes 14 may also be selected to provide an anti-resonant effect that reduces leakage of optical beams from the hollow core 18 into the structural tubes 14. This anti-resonant effect may be optimized by providing the structural tubes 14 with a wall thickness that is an odd multiple of a quarter wavelength of the optical beam. In an exemplary embodiment of the depicted hollow core optical fiber 10, $d_1$ may be about 100 $\mu$m, $d_2$ may be about 250 $\mu$m, $d_3$ may be about 30 $\mu$m, and $d_4$ may be about 40 $\mu$m. However, the fiber optic coupling systems and methods disclosed herein are not limited to hollow core optical fibers having any particular set of structural dimensions.

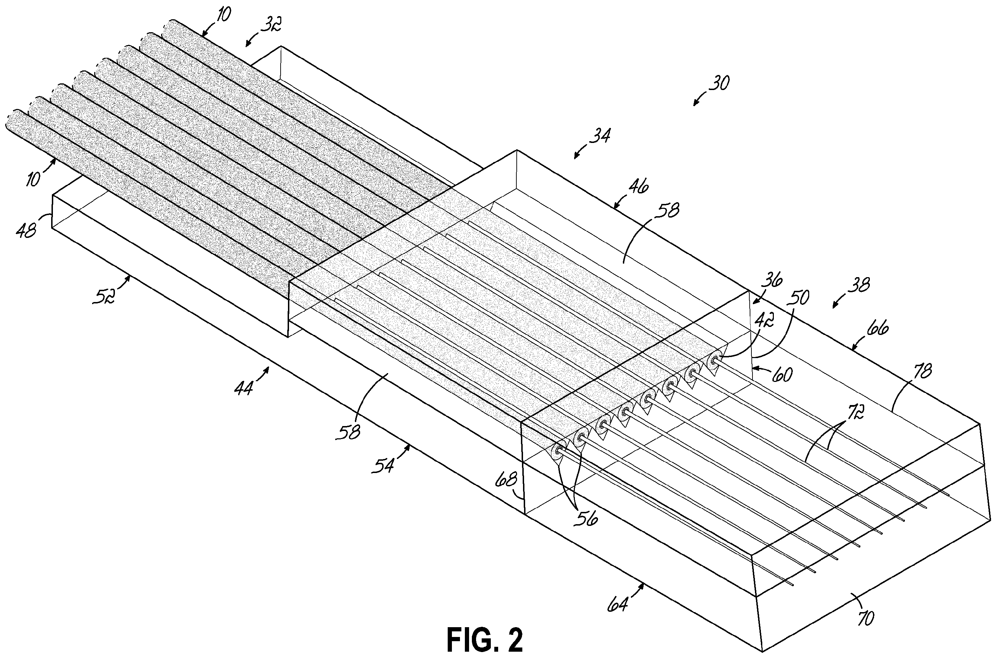

Fig. 2 illustrates a high-density hollow core fiber array unit 30 in accordance with an embodiment of the disclosure. The hollow core fiber array unit 30 is configured to receive an array 32 of hollow core fibers 10 which are terminated at an array adapter ("adapter") 34 that defines a distribution end 36 of the hollow core fiber array unit 30. The array 32 of hollow core fibers 10 may form part of a cable assembly, for example. The other end of the cable assembly may include a hollow core fiber multifiber termination (MTP) push-on connector, for example. The high-density hollow core fiber array unit 30 further includes an integrated spot size converter 38 optically connected to the adapter 34 for mode field diameter adaptation, for example, between the hollow core fibers 10 and corresponding solid core optical fibers to which the high-density hollow core fiber array unit 30 may be connected. As will be described in further detail below, the integrated spot size converter 38 converts an exemplary hollow core optical fiber 10 mode field diameter of about 30 $\mu$m to an exemplary solid core optical fiber mode field diameter of about 10 $\mu$m, to match a standard single mode fiber for optical connection to the high-density hollow core fiber array unit 30. To that end, the hollow core fiber array unit 30 provides a high-density, drop-in replacement for standard single mode fiber array units connected to a transceiver, for example, enabling direct hollow core optical fiber connections to the transceiver without the need for external splices between single mode fibers and hollow core fibers 10. In other words, the hollow core fiber array unit 30 provides a high-density, end-to-end solution for fiber optic equipment, including patch panels and transceivers, using only hollow core fibers 10. Greatly minimizing latency, the hollow core fiber array unit 30 is desirable for fiber optic network applications such as AI systems, for example.

With continued reference to Fig. 2, the hollow core fiber array unit 30 includes an exemplary array 32 of eight (8) hollow core fibers 10, with a terminal end 42 of each fiber 10 being cleaved and terminated in the adapter 34. The terminal end 42 of each fiber 10 may be cleaved to have an end face angle of about 3°, for example. However, the hollow core fiber array unit 30 may include fewer or more hollow core fibers 10. The hollow core fibers 10 may be contained in a common distribution cable, for example.

With continued reference to Fig. 2, the adapter 34 includes a substrate 44 that is configured to receive the terminal end 42 of each hollow core fiber 10 and a cover 46 attachable to the substrate 44 to secure the hollow core fibers 10 in the adapter 34. The substrate 44 extends lengthwise between a base end 48 and a terminal end 50. The substrate 44 includes a support portion 52 at the base end 48 and a grooved portion 54 at the terminal end 50. The cover 46 is configured to be attached to the grooved portion 54. The grooved portion 54 includes a plurality of grooves 56 that extend in parallel along a length of the grooved portion 54. Specifically, each groove 56 extends from an opening at one end of the grooved portion 54 to an opposite opening at the other end of the grooved portion 54, being the terminal end 50 of the substrate 44.

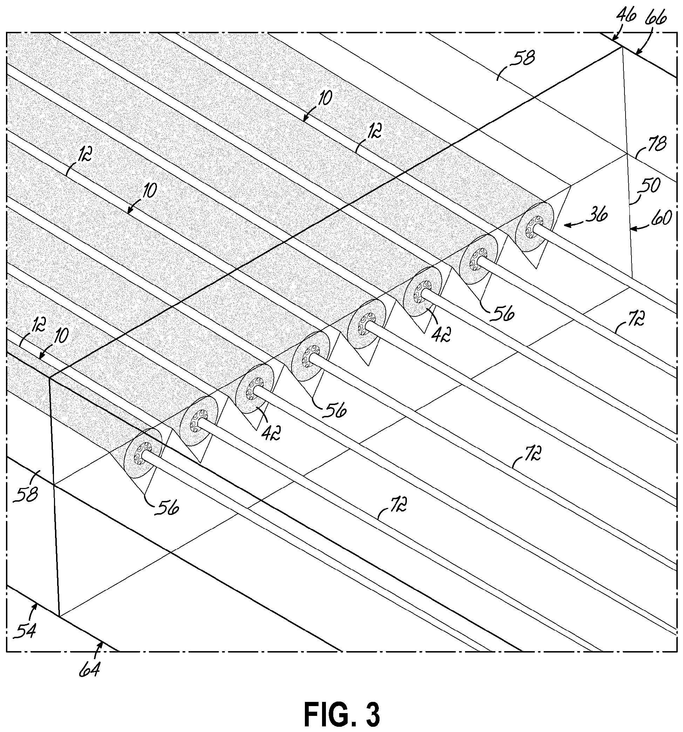

Each groove 56 is configured to receive one hollow core fiber 10 of the array 32. Each groove 56 is generally V-shaped in transverse cross section. A depth of each groove 56 may be sized so that each hollow core fiber 10 transitions seamlessly from the support portion 52 of the substrate 44 into each groove 56. The grooved portion 54 of the substrate 44 includes a pair of outer sidewalls 58 that are configured to receive the cover 46 for attachment to the grooved portion 54. As shown, the cover 46 rests on the sidewalls 58 and extends over the grooves 56 and the hollow core fibers 10, ensuring each hollow core fiber 10 remains positioned within its respective groove 56. The connection of the cover 46 to the sidewalls 58 of the grooved portion 54 of the substrate 44 ensures that each hollow core fiber 10 is held firmly in place between the surfaces of the grooves 56 and the cover 46, as shown in Fig. 3.

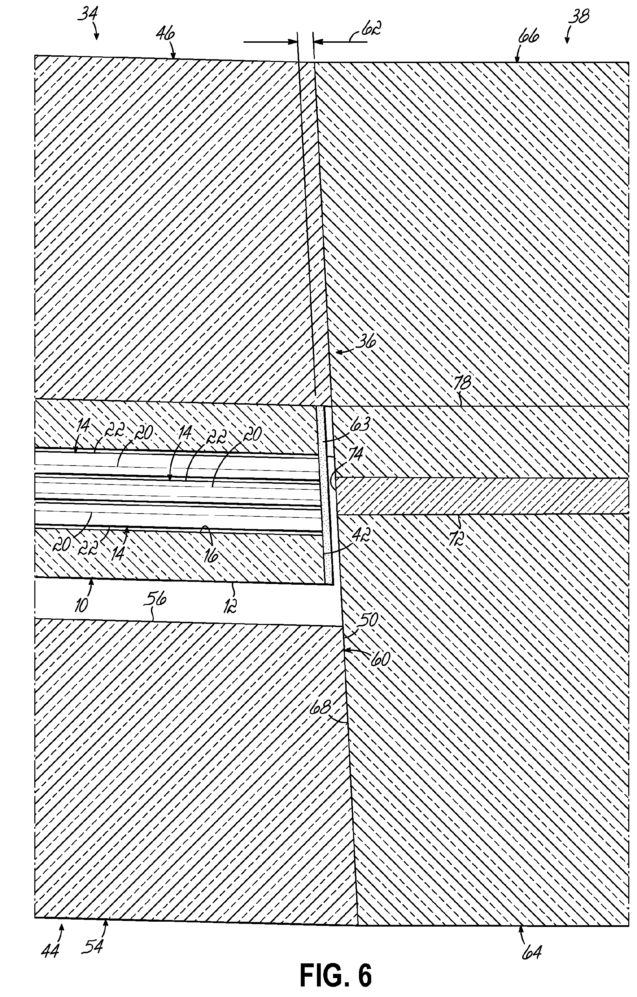

Referring now to Figs. 2 and 3, the cover 46 and the terminal end 50 of the substrate 44 together define an end face 60 of the adapter 34. As shown in Fig. 3, the terminal end 42 of each hollow core fiber 10 is recessed or spaced a distance from the end face 60 of the adapter 34 to define a gap 62 (also see Fig. 6). For example, the terminal end 42 of each hollow core fiber 10 may be recessed about 10 $\mu$m from the end face 60 of the adapter 34. That is, the gap 62 between the terminal end 42 of each hollow core fiber 10 and the end face 60 of the adapter 34 may be about 10 $\mu$m. The end face 60 is preferably sealed with a membrane 63 (Fig. 6) having a thickness of less than about 5 $\mu$m, although the membrane 63 may be thicker or thinner depending on the application.

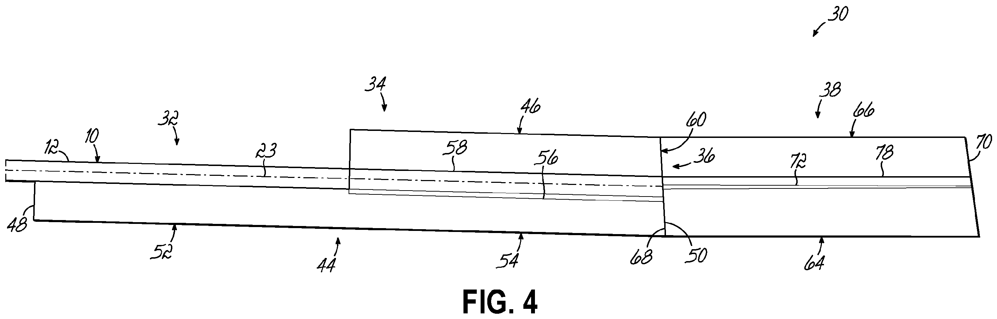

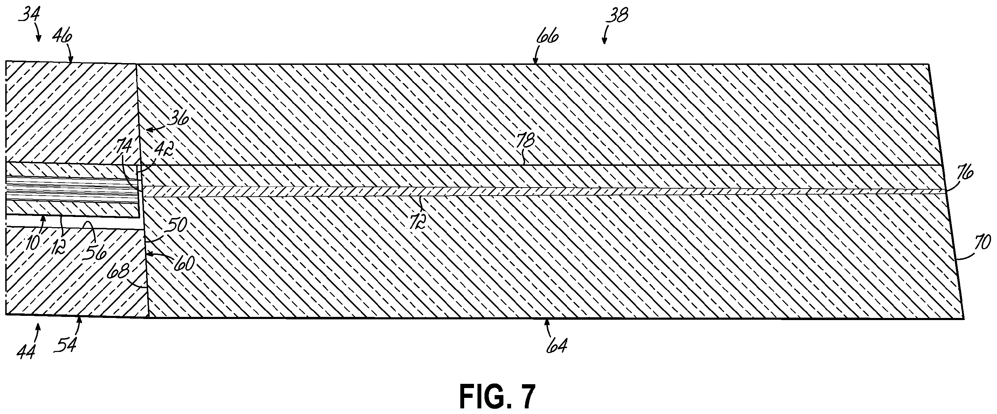

Referring now to Figs. 2 and 4, the end face 60 of the adapter 34 is configured to be coupled to the spot size converter 38. In that regard, the spot size converter 38 includes a substrate 64 and a cover 66 that extend a length between an input end 68 and an output end 70 of the spot size converter 38. The length of the spot size converter 38 may be less than about 5 mm, for example. The cover 66 may be optional and may be included to provide additional support for the connection between the spot size converter 38 and the adapter 34. As will be described in further detail below, the substrate 64 includes an array of optical waveguides ("waveguides") 72 that correspond to the array 32 of hollow core fibers 10 (i.e., eight (8) waveguides 72 corresponding to the eight (8) hollow core fibers 10). The waveguides 72 extend in parallel from an input 74 at the input end 68 of the substrate 64 to an opposite output 76 at the output end 70 of the substrate 64, as shown in e.g., Fig. 7. Returning to Fig. 4, the end face 60 of the adapter 34 is configured to couple to the input end 68 of the spot size converter 38. In that regard, the terminal end 50 of the substrate 44 and the cover 46 of the adapter 34 are pre-polished to provide the end face 60 with an end face angle q, which may be about 4.4°. The end face angle $\theta_2$ may be within a range of between about 1° to about 10°, for example. To obtain low return loss, the input end 68 of the spot size converter 38 may be correspondingly angle polished to provide an input end 68 end face angle $\theta_1$ of about 3°. As used herein, about means +/- 10%.

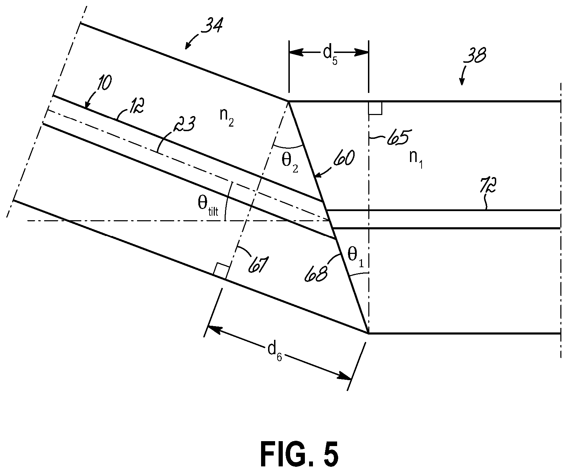

Fig. 5 schematically illustrates the coupling angle between the end face 60 of the adapter 34 and the input end 68 of the spot size converter 38. The spot size converter 38 and the hollow core fiber 10 each have a different refractive index, $n_1$ and $n_2$, respectively. Specifically, $n_1$ and $n_2$ are the effective refractive indices of the spot size converter 38 and the hollow core fiber 10, respectively. Over a short distance (several microns), structure of the spot size converter 38 and the hollow core fiber 10 may be ignored and propagating modes are simply treated like beams propagating between the spot size converter 38 and the hollow core fiber 10 with effective refractive indices and may alternatively be referred to as $n_{eff,1}$ and $n_{2eff,2}$, respectively.

With continued reference to Fig. 5, the input end 68 of the spot size converter 38 is angled to define an end face angle $\theta_1$. The end face angle $\theta_1$ is measured from a plane 65 that is perpendicular to the waveguide 72 and the longitudinal axis of the spot size converter 38. The plane 65 and the input end 68 together define a right triangle, with a leg or side of the triangle opposite the end face angle $\theta_1$ having a length, $d_5$. Similarly, the end face 60 of the adapter 34 is also angled to define an end face angle $\theta_2$, as briefly described above. The end face angle $\theta_2$ is measured from a plane 67 that is perpendicular to the longitudinal axis of the adapter 34. The plane 67 and the end face 60 together define a right triangle, with a leg or side of the triangle opposite the end face angle $\theta_2$ having a length, $d_6$. As shown, the end face angles $\theta_1$ and $\theta_2$ are not equal, resulting in the coupling angle between the end face 60 of the adapter 34 and the input end 68 of the spot size converter 38. Specifically, $\theta_2$ is greater than $\theta_1$ and, resultantly, $d_6$ is greater than $d_5$. As a result of $\theta_1$ and $\theta_2$ being not equal, the hollow core optical fiber 10 is in a tilted axial alignment relative to the corresponding waveguide 72 of the spot size converter 38, resulting in a non-coaxial or non-parallel alignment of the hollow core 18 of the hollow core optical fiber 10 and the corresponding waveguide 72 of the spot size converter 38.

The angled coupling between the end face 60 of the adapter 34 and the input end 68 of the spot size converter 38 results in a tilt angle $\theta_{tilt}$ (otherwise referred to as pitch angle) of the hollow core optical fiber 10. The tilt angle $\theta_{tilt}$ is a measurement of the degree of tilt of the hollow core optical fiber 10 from coaxial alignment of the hollow core 18 of the hollow core optical fiber 10 and the corresponding waveguide 72 of the spot size converter 38. That is, $\theta_{tilt}$ is the angle between the longitudinal axis of the corresponding waveguide 72 of the spot size converter 38 and the axis 23 of the hollow core optical fiber 10. The tilt angle $\theta_{tilt}$ is calculated by

$$\theta_{\text{tilt}} = \arcsin\left(\frac{n_1}{n_2}\sin(\theta_1)\right) - \theta_1$$

. For example, the tilt angle $\theta_{tilt}$ is 1.4° where the spot size converter 38 is formed of glass. However, it will be understood that the tilt angle $\theta_{tilt}$ may vary depending on factors that affect refraction, such as the material of construction of the spot size converter 38, for example. The adapter 34 includes an end face 60 angle $\theta_2$ of 4.4°, so that when the end face 60 of the adapter 34 is bonded to the input end 68 of the spot size converter 38, the tilt angle $\theta_{tilt}$ requirement is met.

Fig. 6 is an enlarged cross-sectional view of the connection between the end face 60 of the adapter 34 and the input end 68 of the spot size converter 38 of the hollow core fiber array unit 30. The connection between the end face 60 of the adapter 34 and the input end 68 of the spot size converter 38 is such that the terminal end 42 of each hollow core fiber 10 is laterally aligned with the input 74 of a corresponding waveguide 72 of the spot size converter 38. In this configuration, the hollow core fibers 10 and waveguides 72 are securely bonded in place to maintain this alignment (e.g., Fig. 3). For example, once the end face 60 of the adapter 34 is sealed by a liquid tight membrane 63, as described above, an optical adhesive may be used to fill the gap between the membrane 63 and the input end 68 of the spot size converter 38. In another embodiment, the end face 60 of the adapter 34 may or may not include a membrane 63. In that regard, optical adhesive may be precisely dispensed on the end face 60 to avoid being pulled into the hollow cores of the hollow core fibers 10.

Fig. 7 illustrates an exemplary one of the waveguides 72 formed in the substrate 64 of the spot size converter 38. Each waveguide 72 may be formed in the substrate 64 as a tapered bore, with the central axis of each waveguide 72 being located about 15 μm below a top surface 78 of the substrate 64. Each waveguide 72 gradually tapers so as to adiabatically transition from the larger sized input 74 at the input end 68 of the substrate 64 to the smaller sized output 76 at the output end 70 of the substrate 64. In that regard, a diameter of the input 74 may be about 30 μm, matching a mode field diameter of the hollow core fiber 10. The output 76 may have a diameter of about 10 μm, matching the mode field diameter of a standard single mode fiber. The substrate 64 and cover 66 at the input end 68 of the spot size converter 28 may be angle polished, as described above, and anti-reflection coated. The substrate 64 and the cover 66 at the output end 70 of the spot size converter 38 do not require an anti-reflection coating, as they interface with standard silica single-mode fibers.

The hollow core fiber array unit 30 may be used in edge coupled transceivers or co-packaged transceiver chiplets as a drop-in replacement for a standard, single mode fiber array unit. In that regard, the output end 70 of the spot size converter 38 of the hollow core fiber array unit 30, which provides an array of outputs 76 having a mode field diameter that is compatible with standard single mode fiber units, may be installed as a "drop-in" unit for connection to a transceiver equipped with an array of standard single mode fiber units. This greatly reduces the time and effort needed to connect the hollow core fibers 10 to the single mode fibers.

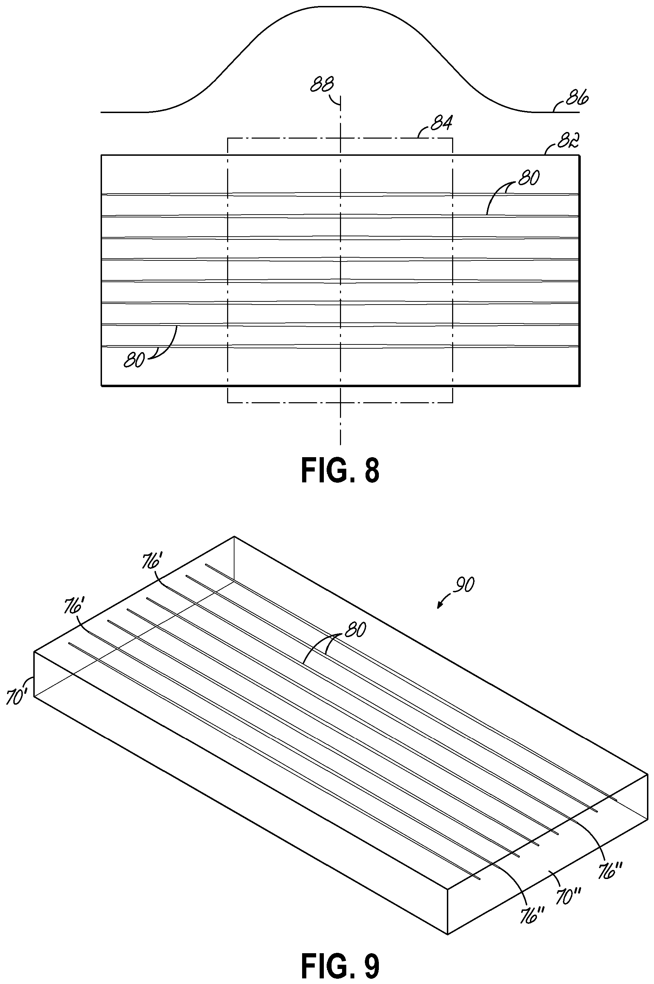

Referring now to Figs. 8-11, a method of manufacturing the spot size converter 38 of the hollow core fiber array unit 30 will now be described. In one embodiment, field assisted ion exchanged glass waveguide preforms 80 are first fabricated on a glass substate 82, as shown schematically in Fig. 8. The glass substrate 82 is heated, with a middle section 84 of the waveguide preforms 80 being locally heated with a flat top temperature profile 86. The maximum temperature is set to further diffuse each waveguide preform 80 to a maximum mode field of 30 μm generally at a midline 88 of the glass substrate 82. Localized heating may be provided by a shaped $CO_2$ (carbon dioxide) laser beam, or a resistive heating element, for example.

The process described above produces a waveguide chip 90 having the plurality of waveguide preforms 80, as shown in Fig. 9. In particular, the waveguide chip 90 includes the array of waveguide preforms 80 formed therein. The waveguide preforms 80 extend in parallel between a first end 70' and an opposite second end 70" of the waveguide chip 90. As shown in Fig. 9, each waveguide preform 80 extends from a first output 76' at the first end 70' of the waveguide chip 90 to a second output 76" at the second end 70" of the waveguide chip 90. Specifically, the waveguide preform 80 gradually increases in cross-sectional diameter (i.e., diffuses or expands) so as to adiabatically transition from the first output 76' at the first output end 70' of the waveguide chip 90 to the midline 88 of the waveguide chip 90 where a diameter of the waveguide preform 80 is at its maximum. From the midline 88, the waveguide preform 80 gradually tapers so as to adiabatically transition from its maximum diameter at the midline 88 to the smaller sized output 76" at the second output end 70" of the waveguide chip 90.

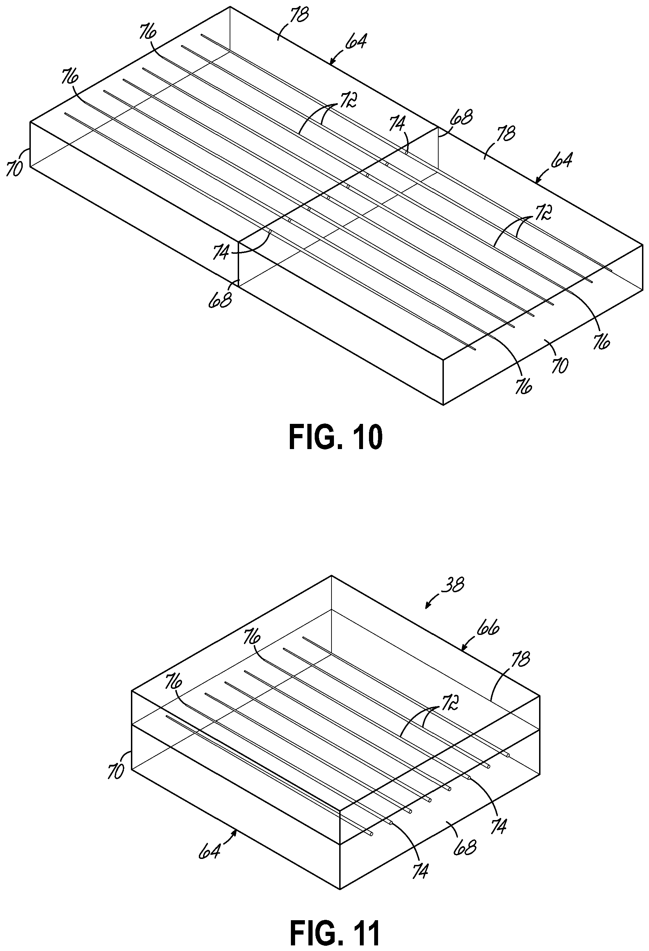

Referring now to Fig. 10, the waveguide chip 90 may be diced or cut in half along the midline 88 to create two identical substrates 64, each for use in a spot size converter 38 of a hollow core fiber array unit 30. Dicing the waveguide chip 90 along the midline 88 defines the waveguides 72 in each substrate 64 and exposes the input 74 to each waveguide 72 at the input end 68 where the waveguide chip 90 was diced. The outputs 76', 76" at the output ends 70', 70" then form the output 76 and the output end 70 of each substrate 64, as described above. Thus, two spot size converters 38 may be formed from a single waveguide chip 90.

In another embodiment, polymer waveguide preforms 80 may be fabricated on a glass or silicon substrate 82. In that regard, the core and cladding polymer material may be UV cured on both ends of the substrate. Specifically, both the core and cladding materials are formed from optically transparent polymers, which may be deposited and then UV-cured at both ends of the substrate to define fixed waveguide geometries. Suitable polymer systems include epoxy-based acrylates, polymethyl methacrylate (PMMA), and fluorinated polymers. In the middle section 84 of the substrate 82, a gradient UV exposure is applied, where the exposure intensity is progressively reduced toward the center. The underexposed polymer core continues to diffuse, leading to a larger mode field diameter before all the polymer is completely cured. The assembly process is similar to that of the glass waveguide preforms 80 described above.

In another embodiment, integrated photonics technology may be utilized to directly fabricate the array of waveguide preforms 80. For example, silicon nitride waveguide spot size converters have demonstrated low insertion loss for fiber-to-chip coupling. In this embodiment, the spot size converter is made of silicon nitride, with the plurality of waveguides including inverse tapers formed on a silicon oxide undercladding and overcladding, each having a thickness of at least 20 $\mu$m. This geometry enables gradual mode expansion and supports efficient coupling to large-mode-area fibers, such as hollow core fibers, by increasing the mode field diameter to approximately 30 $\mu$m. This integrated photonics-based process does not require post-processing. Other waveguide technologies, such as ultrafast laser inscribed glass waveguides, are also feasible options for making the waveguide array spot size converters. Device length may be less than about 5 mm, for example.

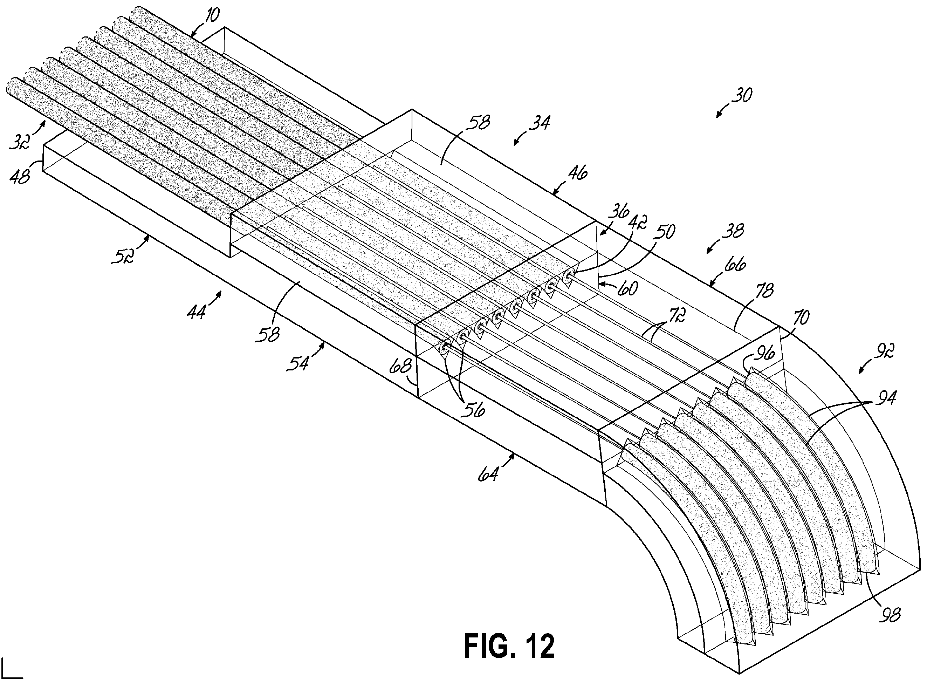

Referring now to Fig. 12, an alternative embodiment of the hollow core fiber array unit 30 is shown. Hollow core fiber 10 used inside a transceiver or a co-packaged module may be bend-insensitive, with the same mode field as the hollow core fiber 10 in the hollow core fiber array unit 30 for transmission. This design trades off attenuation since the length is very short. In that regard, for surface coupled integrated photonics transceiver chips, the hollow core fiber array unit 30 may further include a turn or bend fiber array 92, such as a 90-degree turn fiber array 92, using highly bend insensitive fibers. As shown, the turn fiber array 92 includes an array of fibers 94 that corresponds to the array of fibers 10 terminated at the adapter 34 and the array of waveguides 72 in the spot size converter 38, being eight (8) fibers 94. The length of each fiber 94 from a first end 96 of the fiber to a second end 98 may be less than about 6 mm, having minimal impact on latency. The turn fiber array 92 is coupled to the spot size converter 38 to laterally align the first end 96 of each fiber 94 with a respective output 76 of a waveguide 72 of the spot size converter 38, as shown.

In another embodiment, the hollow core fiber array unit 30 may be coupled to a lens array for expanded beam coupling to transceiver chips. The same lens design for single mode fibers may be used since the mode field at the output 76 of each waveguide 72 of the spot size converter 38 is matched to that of the single mode fiber. Expanded beam coupling is finding growing applications in transceiver to fiber interfaces owing to its insensitivity to contamination.

Compared with existing gradient-index (GRIN) lens or fiber-based spot size conversion processes, the method of manufacturing the spot size converter 38 described above is a wafer-based, highly scalable process optimized for mass production. The end face polishing process only needs to control the angle, unlike the GRIN lens which requires a tight length tolerance of about 10 $\mu$m, making it very challenging to process as an array.

There are many variations of embodiments within the spirit of this disclosure. The hollow core fibers 10 may be anti-resonant fibers or photonic crystal fibers of various mode field diameters and geometries. The single mode silica fibers may have different mode field diameters for coupling to photonic integrated circuits. The fiber count may be 16 or larger as the transceiver bandwidth continues to increase. The transceivers may have an evanescent coupled interface to directly couple to spot size converter 38 of the hollow core fiber array unit 30.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The present disclosure in its broader aspects is therefore not limited to the specific details, representative apparatus and methods and illustrative examples shown and described. Accordingly, departures may be made from such details without departing from the scope of the present disclosure.

## Claims

1.   A hollow core fiber array unit, comprising:

> a plurality of hollow core fibers each having a terminal end;
> an adapter including a plurality of grooves, each for receiving the terminal end of one of the plurality of hollow core fibers, the terminal end of the plurality of hollow core fibers being spaced from an end face of the adapter;
a spot size converter coupled to the end face of the adapter, the spot size converter including a plurality of waveguides that correspond to the plurality of hollow core fibers, each waveguide extending from an input at an input end of the spot size converter that is coupled to the end face of the adapter to an output at an opposite output end of the spot size converter, wherein the input of each waveguide includes a first mode field diameter that corresponds to the plurality of hollow core fibers and the output having a second mode field diameter.

2. The hollow core fiber array unit of claim 1, wherein the second mode field diameter corresponds to a single mode fiber.

3. The hollow core fiber array unit of claim 1 or 2, wherein each waveguide adiabatically transitions from the input to the output of the waveguide.

4. The hollow core fiber array unit of any of the preceding claims, wherein the first mode field diameter is about 30 $\mu$m.

5. The hollow core fiber array unit of any of the preceding claims, wherein the second mode field diameter is about 10 $\mu$m.

6. The hollow core fiber array unit of any of the preceding claims, wherein the terminal end of each of the plurality of hollow core fibers is cleaved;
wherein the terminal end of each of the plurality of hollow core fibers includes an end face angle of about 3°.

7. The hollow core fiber array unit of any of the preceding claims, further comprising a membrane between the end face of the hollow core fiber and the spot size converter;
wherein the membrane includes a thickness of less than about 5 $\mu$m.

8. The hollow core fiber array unit of any of the preceding claims, wherein the spot size converter extends a length between the input end and the output end, the length being less than about 5 mm.

9. The hollow core fiber array unit of any of the preceding claims, wherein the end face of the adapter is angled to define an end face angle.

10. The hollow core fiber array unit of claim 9, wherein the end face angle of the adapter is about 4.4°.

11. The hollow core fiber array unit of any of the preceding claims, wherein the spot size converter is made of glass including thermally diffused waveguide tapers.

12. The hollow core fiber array unit of any of claims 1-11, wherein the spot size converter is made of polymer with the plurality of waveguides having diffusion tapers.

13. The hollow core fiber array unit of any of claims 1-11, wherein the spot size converter is made of silicon nitride with the plurality of waveguides including inverse tapers on silicon oxide undercladding and overcladding having a thickness at least 20 um.

14. The hollow core fiber array unit of any of the preceding claims, wherein a pitch angle is formed between the end face of the adapter and the input end of the spot size converter, the pitch angle being at least 1° relative to a plane of the spot size converter.

15. The hollow core fiber array unit of any of the preceding claims, further comprising a turn fiber array connected to the output end of the spot size converter;
wherein the turn fiber array is a 90° turn fiber array.

**FIG. 1**

EP 4 685 532 A1

**FIG. 2**

EP 4 685 532 A1

**FIG. 3**

FIG. 4

**FIG. 5**

**FIG. 6**

FIG. 7

EP 4 685 532 A1

**FIG. 8**

**FIG. 9**

**FIG. 10**

**FIG. 11**

FIG. 12

# EP 4 685 532 A1

Europäisches
Patentamt
European
Patent Office
Office européen
des brevets

## EUROPEAN SEARCH REPORT

**Application Number**

EP 25 19 0990

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/396931 A1 (HARKER ANDREW THOMAS [GB] ET AL) 23 December 2021 (2021-12-23) * paragraphs [0061], [0064], [0066], [0069], [0070], [0073] - [0074]; figure 13 * ----- | 1-15 | INV. G02B6/02 G02B6/30 ADD. G02B6/12 |
| Y | CN 111 025 487 A (UNIV BEIHANG) 17 April 2020 (2020-04-17) * paragraphs [0007], [0049] - [0050]; figures 3-5,7,10 * ----- | 1-15 | |
| A | WO 2024/133462 A1 (ORANGE [FR]) 27 June 2024 (2024-06-27) * paragraph [0081]; figure 15 * ----- | 7 | |

**TECHNICAL FIELDS SEARCHED (IPC)**

G02B

The present search report has been drawn up for all claims

| Place of search | Date of completion of the search | Examiner |
|---|---|---|
| The Hague | 12 November 2025 | Pantelakis, P |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 19 0990

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2025

| Patent document cited in search report | | Publication date | Patent family member(s) | | Publication date |
|---|---|---|---|---|---|
| US 2021396931 | A1 | 23-12-2021 | CN | 112789534 A | 11-05-2021 |
| | | | EP | 3861386 A1 | 11-08-2021 |
| | | | JP | 7371828 B2 | 31-10-2023 |
| | | | JP | 2022502716 A | 11-01-2022 |
| | | | SG | 11202103114V A | 29-04-2021 |
| | | | US | 2021396931 A1 | 23-12-2021 |
| | | | US | 2024319441 A1 | 26-09-2024 |
| | | | WO | 2020070487 A1 | 09-04-2020 |
| CN 111025487 | A | 17-04-2020 | NONE | | |
| WO 2024133462 | A1 | 27-06-2024 | EP | 4639244 A1 | 29-10-2025 |
| | | | FR | 3144324 A1 | 28-06-2024 |
| | | | WO | 2024133462 A1 | 27-06-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63673901